# EUROPÄISCHE PATENTANMELDUNG

(11) **EP 3 982 469 A1**
(43) Veröffentlichungstag der Anmeldung: **13.04.2022**
(21) Anmeldenummer: 21200381.8
(22) Anmeldetag: 01.10.2021
(51) Int. Cl.: H01M 50/136

(54) **BATTERIEANORDNUNG**

(30) Priorität: 12.10.2020 DE 102020126752
(71) Anmelder: VOLKSWAGEN AG, 38440 Wolfsburg (DE)
(72) Erfinder: Breuer, Alexander, 29227 Celle (DE); Tornow, Alexander, 29369 Ummern (DE); Jordan, Marco, 38229 Salzgitter (DE); Böhm, Dennis, 38302 Wolfenbüttel (DE)
(74) Vertreter: karo IP

(57) **Zusammenfassung**

Batterieanordnung (1), zumindest umfassend ein, ein quaderförmiges Volumen (2) umschließendes, gasdicht ausgeführtes Gehäuse (3) und darin angeordnet zumindest eine Zelle (4) mit aufeinander gestapelten Elektrodenfolien (5); wobei die Zelle (4) in Abhängigkeit von einem Betrieb oder einer Alterung eine Hauptausdehnungsrichtung (6) aufweist; wobei das Gehäuse (3) miteinander verbundene formfeste erste Gehäuseteile (7) und verformbare zweite Gehäuseteile (8) aufweist; wobei zumindest
• die zweiten Gehäuseteile (8) eine Pouchfolie umfassen; oder
• mindestens ein zweites Gehäuseteil (8) mindestens zwei, an zueinander über eine Kante (9) des Volumens (2) benachbart zueinander angeordneten Seitenflächen (10, 11) des quaderförmigen Volumens (2) angeordnete, erste Gehäuseteile (7) über die Kante (9) hinweg verbindet; oder
• eine erste Verbindung (12) zwischen einem zweiten Gehäuseteil (8) und einem ersten Gehäuseteil (7) mit einer zunehmenden Ausdehnung (13) der Zelle (4) sukzessive versagt; oder
• zumindest ein erstes Gehäuseteil (7) bei der Ausdehnung (13) der Zelle (4) gegenüber der Zelle (4) eine rotatorische Bewegung (14) ausführt;
so dass die Ausdehnung (13) der Zelle (4) in der Hauptausdehnungsrichtung (6) kompensierbar ist und die Gasdichtigkeit gewährleistet ist.

## Beschreibung

Die Erfindung betrifft eine Batterieanordnung, zumindest umfassend ein, ein quaderförmiges Volumen umschließendes, gasdicht ausgeführtes Gehäuse und darin angeordnet zumindest eine Zelle mit aufeinander gestapelten/oder gewickelten Elektrodenfolien; wobei die Zelle in Abhängigkeit von einem Betrieb oder einer Alterung eine Hauptausdehnungsrichtung aufweist.

Eine Zelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges auf, wobei die elektrische Maschine durch die in der Zelle gespeicherte elektrische Energie antreibbar ist.

Es sind z. B. Zellen mit flüssigen oder festen Elektrolyten (Festkörperakkumulator) bekannt.

Eine Batterieanordnung umfasst insbesondere eine oder eine Mehrzahl von Zellen, die miteinander elektrisch in Reihe oder parallel geschaltet und in einem Gehäuse angeordnet sind. Zellen können weiterhin zusammen angeordnet werden und bilden so ein Modul einer Batterie.

Die Zellen einer Batterie verändern während eines Belade- und Entladevorgangs und/oder infolge von Alterung über Lebensdauer ihr Volumen. Im Lebensalter einer Lithium-Ionen-Zelle (Prismatische, Pouch- oder Rund-Zelle) kommt es aufgrund der Zyklisierung zu einem Dickenwachstum innerhalb der Zelle. Dieses Dickenwachstum tritt verstärkt entlang des Normalenvektors zur Zelle, also quer zur Ebene der Elektrodenfolien, auf. Zusätzlich kommt es zu Längenänderungen, welche jedoch deutlich geringer ausfallen und damit zu vernachlässigen sind. Aktuell ermöglichen konventionelle Hard-Case Behälter für Lithium-Ionen Zellen keinen oder nur einen geringfügigen translatorischen Ausgleich.

Verstärkt wird die Problematik des Dickenwachstums zusätzlich durch neue Zelltechnologien wie der Feststoffbatterie. Bei dieser Zelltechnologie treten erhebliche Volumenänderungen, beziehungsweise ein translatorischer Wachstum, insbesondere durch die Volumenänderung der Anode, auf. Im entladenen Zustand der Zelle ist eine sehr geringe Menge Lithium auf der Anode und im geladenen Zustand eine sehr große Menge Lithium vorhanden. Der Mengenunterschied kann bei bestimmten Anodenmaterialien bis zu ca. 100 % Volumenänderung zwischen geladenem und entladenem Zustand ausmachen. Um zusätzlich die Grenzschichten, beziehungsweise die Kontaktflächen, der Einzellagen innerhalb der Zelle aufrecht zu erhalten, müssen diese dauerhaft mechanisch verspannt werden. Das technische Problem besteht somit darin die mechanische Verspannung der Zelle zu ermöglichen und gleichzeitig einen translatorischen Ausgleich zu gewährleisten. Eine zu jedem Zeitpunkt verspannte Anordnung der Zellen in einem Gehäuse ist bevorzugt, um z. B. eine mechanische Beschädigung der Zellen durch eine Relativbewegung gegenüber dem Gehäuse zu verhindern. Dabei ist jedoch zu beachten, dass die Vorspannung einen Grenzwert nicht überschreitet. Wird der translatorische Ausgleich nicht geschaffen, kommt es zu Defiziten in der Zellperformance und im schlimmsten Fall zu einem Versagen der Zelle.

Im Betrieb einer Batterie ist die Volumenänderung insbesondere auszugleichen bzw. zu kompensieren. Dafür ist der Einsatz von Druckmatten oder die Verspannung der Zellen in den Modulen einer Batterie über die Verschraubung von Endplatten der Module bekannt.

Alle bisher bekannten Systeme müssen beim Entladen während des Betriebs eines Kraftfahrzeuges nachgestellt werden. Der apparative Aufwand zum Kompensieren der Volumenänderung kann sehr kostenintensiv und fehleranfällig sein. Insbesondere müssen gerade für große Volumenänderungen geeignete elastische Elemente oder z. B. hydraulische Apparaturen bereitgestellt werden.

Aus der DE 10 2015 010 259 A1 ist ein Zellgehäuse zur Aufnahme einer elektrochemisch aktiven Elektrodenfolienanordnung für eine als quaderförmige Hartschalenzelle ausgebildete Einzelzelle bekannt. Zum Ausgleich einer Längenänderung des Zellstapels weist eine Schmalseite des Zellgehäuses zumindest abschnittsweise ein oberflächenvergrößerndes Profil auf, z. B. ein Zick-Zack-Profil, ein Wellenprofil oder eine Ausbuchtung in Form eines stumpfwinkeligen Knicks. Bei einer Volumenänderung der Zelle verformt sich das Profil und kann so einen sich vergrößernden Abstand der festen Gehäusebestandteile kompensieren.

Aus der US 2018/0277824 A1 ist eine Batterie mit einem Gehäuse und ein Verfahren zu deren Herstellung bekannt. Das Gehäuse weist einen Sicherheitsmechanismus auf, durch den bei Überschreitung eines Innendrucks im Gehäuse eine Weiterleitung eines elektrischen Stroms aus der Batterie unterbunden wird.

Aufgabe der vorliegenden Erfindung ist es, die mit Bezug auf den Stand der Technik angeführten Probleme zumindest teilweise zu lösen. Insbesondere soll eine Batterieanordnung vorgeschlagen werden, die eine Kompensation der Volumenänderung ermöglicht. Dabei sollen auch große Volumenänderungen sicher kompensierbar sein. Dabei sind Kosten und Montageaufwand möglichst gering zu halten.

Zur Lösung dieser Aufgaben trägt eine Batterieanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Batterieanordnung vorgeschlagen, zumindest umfassend ein, ein quaderförmiges Volumen umschließendes, gasdicht ausgeführtes Gehäuse und darin angeordnet zumindest eine Zelle mit aufeinander gestapelten oder gewickelten Elektrodenfolien. Die Zelle weist in Abhängigkeit von einem Betrieb oder einer Alterung zumindest eine Hauptausdehnungsrichtung auf. Das Gehäuse weist miteinander verbundene formfeste erste Gehäuseteile und verformbare zweite Gehäuseteile auf. Zumindest
- die zweiten Gehäuseteile umfassen eine Pouchfolie; oder
- mindestens ein zweites Gehäuseteil verbindet mindestens zwei, an zueinander über eine Kante des Volumens benachbart zueinander angeordneten Seitenflächen des quaderförmigen Volumens angeordnete, erste Gehäuseteile über die Kante hinweg; oder
- eine erste Verbindung zwischen einem zweiten Gehäuseteil und einem ersten Gehäuseteil versagt mit einer zunehmenden Ausdehnung der Zelle sukzessive; oder
- zumindest ein erstes Gehäuseteil führt bei der Ausdehnung der Zelle gegenüber der Zelle eine rotatorische Bewegung aus;
so dass die Ausdehnung der Zelle zumindest (oder auch nur) in der Hauptausdehnungsrichtung kompensierbar ist und die Gasdichtigkeit gewährleistet ist.

Die Elektrodenfolien umfassen in bekannter Weise insbesondere mindestens eine Anode, eine Kathode sowie eine Separatorfolie (kann auch ein Feststoffelektrolyt sein), die aufeinander gestapelt angeordnet sind und die Zelle bilden.

Die Zelle weist in Abhängigkeit von einem Betrieb oder einer Alterung eine Hauptausdehnungsrichtung auf, in der eine Ausdehnung der Zelle vergleichsweise stärker auftritt als eine Ausdehnung in die anderen Richtungen. Die Ausdehnung in der Hauptausdehnungsrichtung ist insbesondere für den größten Anteil der Veränderung des Volumens der Zelle bzw. des sich dadurch vergrößernden Gehäuses verantwortlich.

Ein formfestes erstes Gehäuseteil ist z. B. ein Bestandteil eines bekannten sogenannten Hard-Case (festen Gehäuse) einer Zelle, d. h. das erste Gehäuseteil verformt sich im bestimmungsgemäßen Gebrauch der Batterieanordnung nicht oder nur unwesentlich.

Ein verformbares zweites Gehäuseteil dient insbesondere dazu, die Volumenänderung bzw. die Ausdehnung der Zelle durch Verformung zu kompensieren, also auszugleichen. Damit kann eine gasdichte Abdichtung der Zelle auch bei Änderung des Volumens der Zelle gewährleistet bleiben, da die zweiten Gehäuseteile der infolge der Volumenänderung sich ändernden Lage der ersten Gehäuseteile nachfolgen.

Jede Zelle weist z. B. in Abhängigkeit von einem in ihr gespeicherten Energieinhalt ein bestimmtes Volumen auf, das sich zwischen einem, bei einem geringen Energieinhalt bzw. geringem SOC (state-of-charge; also Ladezustand), geringen Volumen und einem, bei einem hohen Energieinhalt bzw. hohem SOC, großen Volumen verändert. Die Volumenänderung findet insbesondere im Wesentlichen im Bereich der mindestens einen Anode der Zellen statt. Die Anode, z. B. bestehend aus Graphit oder einem Metall, bzw. bei einem Lithium-Ionen-Akkumulator aus metallischem Lithium, verändert ihr Volumen durch die Interkalation der Lithium-Ionen bzw. die Abscheidung von reinem metallischem Lithium.

Die Anode ist insbesondere flächig als Elektrodenfolie ausgebildet und erstreckt sich mit der größten Fläche quer zur Hauptausdehnungsrichtung. Die Volumenänderung wirkt sich insbesondere im Wesentlichen in der Hauptausdehnungsrichtung aus, d. h. das Maß einer Dicke der Anode verändert sich in Abhängigkeit von dem Anodenmaterial. Dabei kann die Volumenänderung in Abhängigkeit von dem verwendeten Anodenmaterial zwischen 6 und 100 % betragen. In Bezug auf die Zelle bedeutet das insbesondere, dass die Zellen eine Volumenänderung zwischen 5 und 95 % aufweisen kann.

Vorliegend werden unterschiedliche Eigenschaften der Batterieanordnung vorgeschlagen, die jeweils einzeln oder zumindest in Kombination mit einer weiteren oder mehreren Eigenschaften eingesetzt bzw. verwendet werden können.

Gemäß einer ersten Ausgestaltung kann ein zweites Gehäuseteil eine Pouchfolie umfassen bzw. als Pouchfolie ausgeführt sein.

Eine Pouchfolie ist ein bekanntes verformbares Gehäuseteil, dass als Gehäuse für sogenannte Pouchzellen eingesetzt wird. Es handelt sich dabei um eine Kompositmaterial, z. B. umfassend einen Kunststoff und Aluminium. Vorliegend wird also insbesondere vorgeschlagen, die zweiten Gehäuseteile durch eine Pouchfolie auszubilden.

Alternativ kann das zweite Gehäuseteil eine dünnwandige Ausführung des ersten Gehäuseteils umfassen.

Insbesondere kann das zweite Gehäuseteil so angeordnet bzw. ausgeführt werden, dass es elastisch verformbar ist, so dass eine Verformung des zweiten Gehäuseteils zumindest teilweise reversibel ist. Insbesondere kann das zweite Gehäuseteil aber zumindest teilweise oder insgesamt (nur) plastisch verformbar sein. Insbesondere kann zur Verformung des zweiten Gehäuseteils eine Mindestkraft bzw. ein Mindestmoment erforderlich sein, so dass über den zweiten Gehäuseteil die ersten Gehäuseteile in Bezug auf die Zelle vorgespannt angeordnet sein können.

Gemäß einer zweiten Ausgestaltung verbindet mindestens ein zweites Gehäuseteil mindestens zwei, an zueinander über eine Kante des Volumens benachbart zueinander angeordneten Seitenflächen des quaderförmigen Volumens angeordnete, erste Gehäuseteile über die Kante hinweg. Z. B. sind erste Gehäuseteile an einer ersten Seitenfläche angeordnet, wobei die erste Seitenfläche quer zur Hauptausdehnungsrichtung verläuft. Die erste Seitenfläche wird also infolge der Volumenänderung der Zelle im Vergleich mit anderen Seitenflächen maximal verlagert. Zweite Seitenflächen erstrecken sich z. B. parallel zur Hauptausdehnungsrichtung und werden bei einer Volumenänderung der Zelle in vergleichsweise geringem Maß verlagert.

Ist also ein erstes Gehäuseteil an einer ersten Seitenfläche und ein weiteres erstes Gehäuseteil an einer zweiten Seitenfläche angeordnet, so werden die an der ersten Seitenfläche angeordneten Gehäuseteile gegenüber den an der zweiten Seitenfläche angeordneten Gehäuseteilen verlagert. Damit werden aber auch die Anbindungspunkte zwischen dem dort angeordneten zweiten Gehäuseteil und den ersten Gehäuseteilen relativ zueinander bewegt. Diese Relativbewegung wird nun von dem zweiten Gehäuseteil kompensiert bzw. aufgenommen, so dass die gasdichte Ausführung des Gehäuses gewährleistet bleibt.

Gemäß einer dritten Ausgestaltung versagt eine erste Verbindung zwischen einem zweiten Gehäuseteil und einem ersten Gehäuseteil mit einer zunehmenden Ausdehnung der Zelle sukzessive.

Die erste Verbindung ist z. B. in Form einer bekannten Siegelnaht ausgeführt. Eine Siegelnaht gewährleistet eine gasdichte Verbindung zweier Gehäuseteile, z. B. über eine Verschweißung.

Infolge des sukzessiven Versagens der ersten Verbindung kann z. B. eine Vorspannung auf die Zelle, die durch die zweiten Gehäuseteile erzeugt wird, trotz fortschreitender Ausdehnung aufrechterhalten werden, weil das Volumen des Gehäuses so stufenweise vergrößerbar ist.

Ein sukzessives Versagen kann z. B. dadurch realisiert werden, dass die Siegelnaht mit sogenannten Sollbruchstellen ausgeführt ist, die infolge der zunehmenden Ausdehnung der Zelle und der damit verbundenen zunehmenden Verformung des zweiten Gehäuseteils nacheinander beansprucht und sukzessive zerstört werden.

Gemäß einer vierten Ausgestaltung führt zumindest ein erstes Gehäuseteil bei der Ausdehnung der Zelle gegenüber der Zelle eine rotatorische Bewegung aus. Die rotatorische Bewegung wird durch an das erste Gehäuseteil angebundene zweite Gehäuseteile ermöglicht, die die Lageveränderung des ersten Gehäuseteils durch Verformung kompensieren.

Insbesondere ist zumindest ein zweites Gehäuseteil über mindestens eine Siegelnaht gasdicht mit mindestens einem ersten Gehäuseteil verbunden. Bevorzugt sind alle Gehäuseteile miteinander über Siegelnähte miteinander verbunden.

Insbesondere sind zumindest ein zweites Gehäuseteil und ein erstes Gehäuseteil zumindest teilweise einander überlappend angeordnet, wobei die Gehäuseteile im Bereich der Überlappung miteinander verbunden sind, z. B. über eine Siegelnaht.

Insbesondere weist das, gemäß der zweiten Ausgestaltung die ersten Gehäuseteile über die Kante hinweg verbindende zweite Gehäuseteil zwischen den Verbindungen mit den ersten Gehäuseteilen einen sich über die Kante hinweg erstreckenden unverbundenen Abschnitt auf. Die Verformung des zweiten Gehäuseteils erfolgt insbesondere ausschließlich in dem Abschnitt.

Die erste Verbindung gemäß der dritten Ausgestaltung ist auf einer ersten Seite des ersten Gehäuseteils angeordnet und das zweite Gehäuseteil erstreckt sich ausgehend von der ersten Verbindung um einen Endbereich des ersten Gehäuseteils hin zu einer gegenüberliegenden zweiten Seite und ist dort über eine zweite Verbindung mit dem ersten Gehäuseteil gasdicht verbunden. Über diese Anordnung kann sichergestellt werden, dass sich nur die erste Verbindung sukzessive auflöst und damit eine Ausdehnung der Zelle bei Gewährleistung der Gasdichtigkeit des Gehäuses ermöglicht wird.

Insbesondere verformt sich das zweite Gehäuseteil gemäß der dritten Ausgestaltung, während der Ausdehnung der Zelle und während die erste Verbindung infolge der Ausdehnung der Zelle sukzessive versagt, sukzessive weiter.

Insbesondere rotiert das gemäß der vierten Ausgestaltung die rotatorische Bewegung ausführende erste Gehäuseteil um eine, an einer Seitenfläche des Volumens angeordnete und gegenüber der Seitenfläche ortsfeste Kipppachse.

Insbesondere ist die Kippachse an einer ersten Seitenfläche angeordnet. Insbesondere verläuft die Kippachse parallel zur ersten Seitenfläche.

Insbesondere stützt sich das erste Gehäuseteil mit der Kippachse an einer formfesten Stützplatte gegenüber der Zelle ab. Mit der Stützplatte kann eine lokale Flächenpressung als Folge der Abrollbewegung des rotierenden ersten Gehäuseteil gering gehalten werden, so dass Bestandteile der Zelle nicht beschädigt werden.

Insbesondere hält das Gehäuse während der Ausdehnung der Zelle eine konstante Verspannung bzw. Vorspannung der Zelle zumindest gegenüber der Hauptausdehnungsrichtung aufrecht.

Insbesondere ist zumindest zwischen zwei ersten Gehäuseteilen mindestens ein elastisch verformbares Federelement angeordnet, so dass das Gehäuse während der Ausdehnung der Zelle eine konstante Verspannung der Zelle zumindest gegenüber der Hauptausdehnungsrichtung aufrechterhält. Als Federelement können z. B. Zugfedern eingesetzt werden, die insbesondere innerhalb des Gehäuses gegenüberliegende erste Seitenflächen miteinander verbinden.

Insbesondere sind in den zweiten Gehäuseteilen, bevorzugt aber (nur) in den ersten Gehäuseteilen, Versagensstellen mit verminderter Festigkeit angeordnet bzw. vorgesehen, so dass einem "thermal runaway", also einer unkontrollierten Erwärmung der Zelle eine Notentlüftung der Zelle über das Gehäuse bzw. die Versagensstelle an die Umgebung erfolgen kann.

Insbesondere wird die Batterieanordnung in einem Kraftfahrzeug eingesetzt bzw. verwendet, insbesondere zur Bereitstellung elektrischer Energie für einen Traktionsantrieb.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Batterieanordnung gemäß einer ersten Ausführungsvariante in einer Seitenansicht im Schnitt;
- Fig. 2:: die Batterieanordnung nach Fig. 1 in einer Seitenansicht im Schnitt, im ausgedehnten Zustand;
- Fig. 3:: eine Batterieanordnung gemäß einer zweiten Ausführungsvariante in einer Seitenansicht im Schnitt;
- Fig. 4:: die Batterieanordnung nach Fig. 3 in einer Seitenansicht im Schnitt, im ausgedehnten Zustand;
- Fig. 5:: eine Batterieanordnung gemäß einer dritten Ausführungsvariante in einer Seitenansicht im Schnitt;
- Fig. 6:: die Batterieanordnung nach Fig. 5 in einer Seitenansicht im Schnitt, im ausgedehnten Zustand;
- Fig. 7:: eine Batterieanordnung gemäß einer vierten Ausführungsvariante in einer Seitenansicht im Schnitt;
- Fig. 8:: die Batterieanordnung nach Fig. 7 in einer Seitenansicht im Schnitt, im ausgedehnten Zustand;
- Fig. 9:: eine Batterieanordnung gemäß einer fünften Ausführungsvariante in einer Seitenansicht im Schnitt;
- Fig. 10:: die Batterieanordnung nach Fig. 9 in einer Seitenansicht im Schnitt, im ausgedehnten Zustand;
- Fig. 11:: eine Batterieanordnung gemäß einer sechsten Ausführungsvariante in einer Seitenansicht im Schnitt; und
- Fig. 12:: die Batterieanordnung nach Fig. 11 in einer Seitenansicht im Schnitt, im ausgedehnten Zustand.

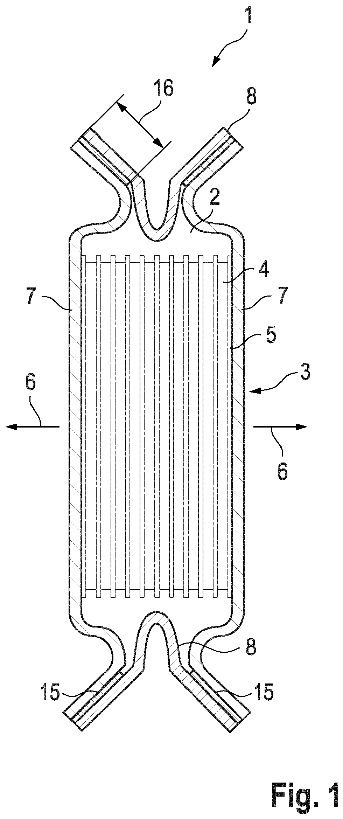

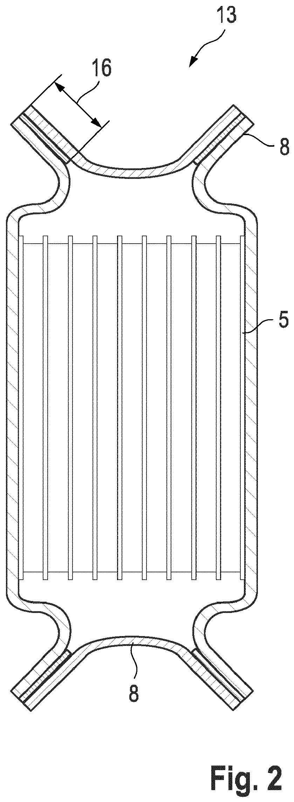

Die Fig. 1 zeigt eine Batterieanordnung 1 gemäß einer ersten Ausführungsvariante in einer Seitenansicht im Schnitt. Fig. 2 zeigt die Batterieanordnung 1 nach Fig. 1 in einer Seitenansicht im Schnitt, im ausgedehnten Zustand. Die Fig. 1 und 2 werden im Folgenden gemeinsam beschrieben.

Die Batterieanordnung 1 umfasst ein, ein quaderförmiges Volumen 2 umschließendes, gasdicht ausgeführtes Gehäuse 3 und darin angeordnet zumindest eine Zelle 4 mit aufeinander gestapelten Elektrodenfolien 5. Die Zelle 4 weist in Abhängigkeit von einem Betrieb oder einer Alterung eine Hauptausdehnungsrichtung 6 auf. Das Gehäuse 3 weist miteinander verbundene formfeste erste Gehäuseteile 7 und verformbare zweite Gehäuseteile 8 auf. Die zweiten Gehäuseteile 8 umfassen eine Pouchfolie (gemäß der ersten Ausgestaltung). Durch die zweiten Gehäuseteile 8 ist die Ausdehnung 13 der Zelle 4 in der Hauptausdehnungsrichtung 6 kompensierbar und die Gasdichtigkeit gewährleistet.

Ein verformbares zweites Gehäuseteil 8 dient dazu, die Volumenänderung bzw. die Ausdehnung 13 der Zelle 4 durch Verformung zu kompensieren, also auszugleichen. Damit kann eine gasdichte Abdichtung der Zelle 4 auch bei Änderung des Volumens 2 der Zelle 4 gewährleistet bleiben, da die zweiten Gehäuseteile 8 der infolge der Volumenänderung sich ändernden Lage der ersten Gehäuseteile 7 nachfolgen.

Das zweite Gehäuseteil 8 ist so angeordnet bzw. ausgeführt, dass es elastisch verformbar ist, so dass eine Verformung des zweiten Gehäuseteils 8 zumindest teilweise reversibel ist. Zur Verformung des zweiten Gehäuseteils 8 ist eine Mindestkraft bzw. ein Mindestmoment erforderlich, so dass über den zweiten Gehäuseteil 8 die ersten Gehäuseteile 7 in Bezug auf die Zelle 4 vorgespannt angeordnet sind.

Die zweiten Gehäuseteile 8 und die ersten Gehäuseteile 7 sind jeweils teilweise einander überlappend angeordnet, wobei die Gehäuseteile 7, 8 im Bereich der Überlappung miteinander über eine Siegelnaht 15 verbunden sind.

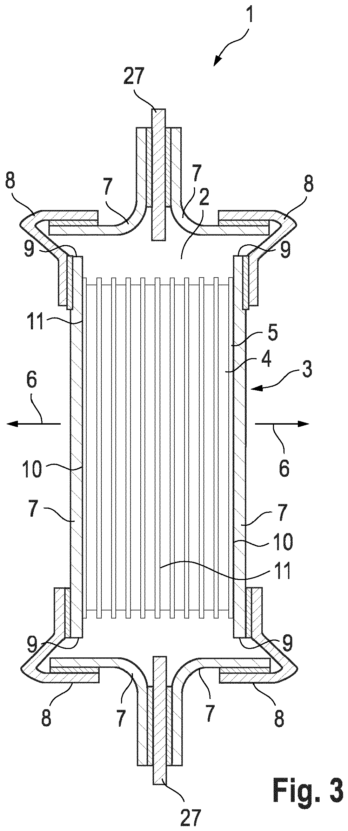

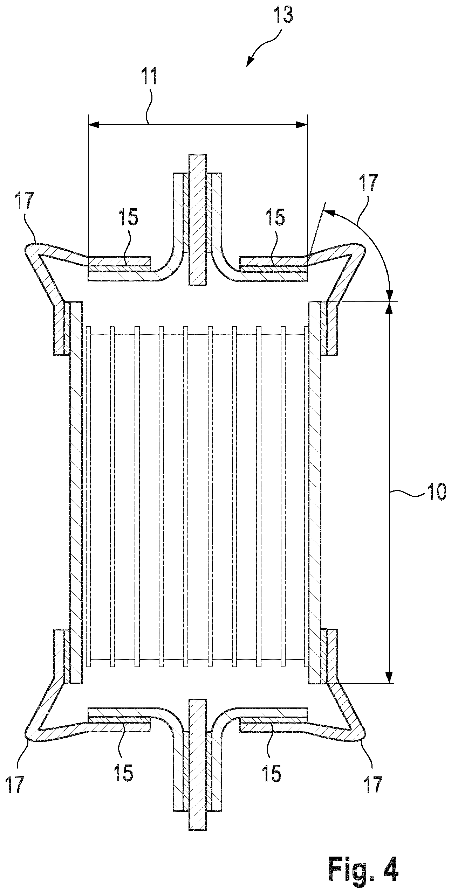

Die Fig. 3 zeigt eine Batterieanordnung 1 gemäß einer zweiten Ausführungsvariante in einer Seitenansicht im Schnitt. Fig. 4 zeigt die Batterieanordnung 1 nach Fig. 3 in einer Seitenansicht im Schnitt, im ausgedehnten Zustand. Die Fig. 3 und 4 werden im Folgenden gemeinsam beschrieben. Auf die Ausführungen zu den Fig. 1 und 2 wird verwiesen.

Gemäß der zweiten Ausführungsvariante (zweite Ausgestaltung) verbindet jeweils ein zweites Gehäuseteil 8 mindestens zwei, an zueinander über eine Kante 9 des Volumens 2 bzw. der Zelle 4 benachbart zueinander angeordneten Seitenflächen 10, 11 des quaderförmigen Volumens 2 angeordnete, erste Gehäuseteile 7 über die Kante 9 hinweg. Hier sind erste Gehäuseteile 7 an einer ersten Seitenfläche 10 angeordnet, wobei die erste Seitenfläche 10 quer zur Hauptausdehnungsrichtung 6 verläuft. Die erste Seitenfläche 10 wird infolge der Volumenänderung der Zelle 4 im Vergleich mit anderen Seitenflächen 11 maximal verlagert. Zweite Seitenflächen 11 erstrecken sich parallel zur Hauptausdehnungsrichtung 6 und werden bei einer Volumenänderung der Zelle 4 in vergleichsweise geringem Maß verlagert. Die an den zweiten Seitenflächen 11 angeordneten, zweite Gehäuseteile 8 sind jeweils über Siegelelementen 27 miteinander verbunden. Eine Verformbarkeit des Siegelelements 27 ist insbesondere nicht erforderlich.

Die an der ersten Seitenfläche 10 angeordneten ersten Gehäuseteile 7 werden gegenüber den an der zweiten Seitenfläche 11 angeordneten ersten Gehäuseteilen 7 verlagert. Damit werden aber auch die Anbindungspunkte zwischen dem dort angeordneten zweiten Gehäuseteil 8 und den ersten Gehäuseteilen 7 relativ zueinander bewegt. Diese Relativbewegung wird nun von dem zweiten Gehäuseteil 8 kompensiert bzw. aufgenommen, so dass die gasdichte Ausführung des Gehäuses 3 gewährleistet bleibt.

Das die ersten Gehäuseteile 7 über die Kante 9 hinweg verbindende zweite Gehäuseteil 8 weist zwischen den als Siegelnaht 15 ausgeführten Verbindungen mit den ersten Gehäuseteilen 7 einen sich über die Kante 9 hinweg erstreckenden unverbundenen Abschnitt 17 auf. Die Verformung des zweiten Gehäuseteils 8 erfolgt ausschließlich in dem Abschnitt 17.

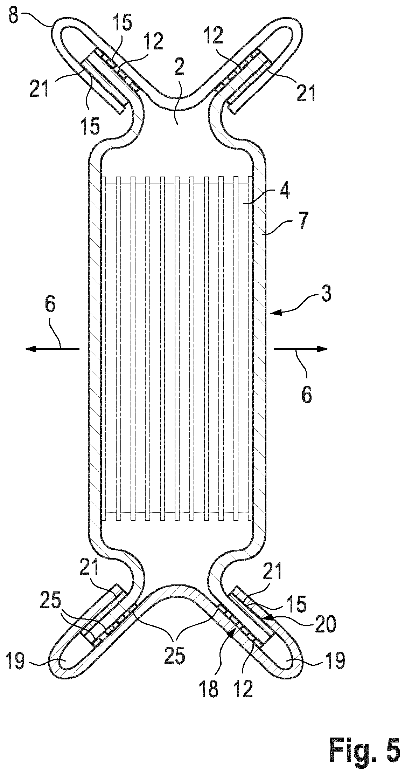

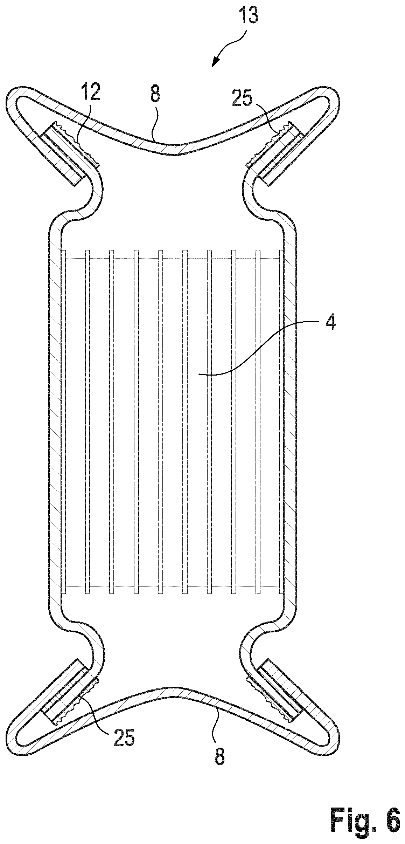

Die Fig. 5 zeigt eine Batterieanordnung 1 gemäß einer dritten Ausführungsvariante in einer Seitenansicht im Schnitt. Fig. 6 zeigt die Batterieanordnung 1 nach Fig. 5 in einer Seitenansicht im Schnitt, im ausgedehnten Zustand. Die Fig. 5 und 6 werden im Folgenden gemeinsam beschrieben. Auf die Ausführungen zu den Fig. 1 bis 4 wird verwiesen.

Gemäß der dritten Ausführungsvariante (dritte Ausgestaltung) versagt eine erste Verbindung 12 zwischen einem zweiten Gehäuseteil 8 und einem ersten Gehäuseteil 7 mit einer zunehmenden Ausdehnung 13 der Zelle 4 sukzessive.

Die erste Verbindung 12 ist in Form einer bekannten Siegelnaht 15 ausgeführt.

Infolge des sukzessiven Versagens der ersten Verbindung 12 kann eine Vorspannung auf die Zelle 4, die durch die zweiten Gehäuseteile 8 erzeugt wird, trotz fortschreitender Ausdehnung 13 aufrechterhalten werden, weil das Volumen 2 des Gehäuses 3 so stufenweise vergrößerbar ist.

Ein sukzessives Versagen kann dadurch realisiert werden, dass die Siegelnaht 15 mit sogenannten Sollbruchstellen 25 ausgeführt ist, die infolge der zunehmenden Ausdehnung 13 der Zelle 4 und der damit verbundenen zunehmenden Verformung des zweiten Gehäuseteils 8 nacheinander beansprucht und sukzessive zerstört werden.

Die erste Verbindung 12 ist auf einer ersten Seite 18 des ersten Gehäuseteils 7 angeordnet und das zweite Gehäuseteil 8 erstreckt sich ausgehend von der ersten Verbindung 12 um einen Endbereich 19 des ersten Gehäuseteils 7 hin zu einer gegenüberliegenden zweiten Seite 20 und ist dort über eine zweite Verbindung 21 mit dem ersten Gehäuseteil 7 gasdicht verbunden. Über diese Anordnung kann sichergestellt werden, dass sich nur die erste Verbindung 12 sukzessive auflöst und damit eine Ausdehnung 13 der Zelle 4 bei Gewährleistung der Gasdichtigkeit des Gehäuses 3 ermöglicht wird.

Das zweite Gehäuseteil 8 verformt sich während der Ausdehnung 13 der Zelle 4 sukzessive weiter, während die erste Verbindung 12 infolge der Ausdehnung 13 der Zelle 4 sukzessive versagt.

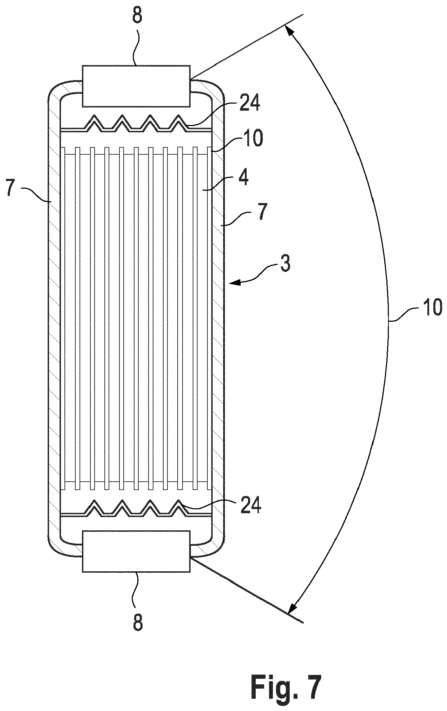

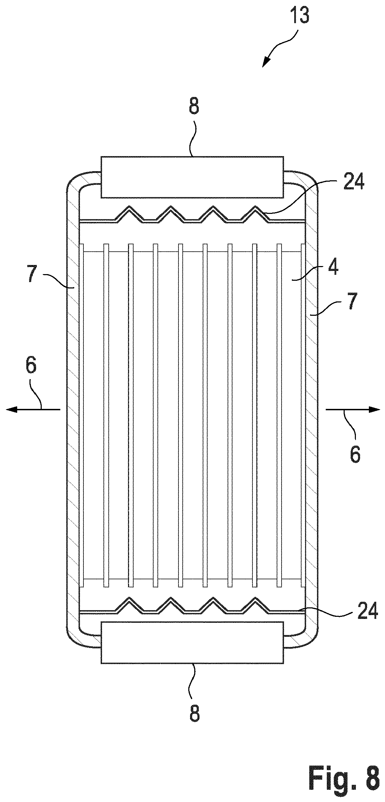

Die Fig. 7 zeigt eine Batterieanordnung 1 gemäß einer vierten Ausführungsvariante in einer Seitenansicht im Schnitt. Fig. 8 zeigt die Batterieanordnung 1 nach Fig. 7 in einer Seitenansicht im Schnitt, im ausgedehnten Zustand. Die Fig. 7 und 8 werden im Folgenden gemeinsam beschrieben. Auf die Ausführungen zu den Fig. 1 bis 6 wird verwiesen.

Zwischen zwei einander gegenüberliegenden ersten Gehäuseteilen 7 sind elastisch verformbare Federelemente 24 angeordnet, so dass das Gehäuse 3 während der Ausdehnung 13 der Zelle 4 eine konstante Verspannung der Zelle 4 gegenüber der Hauptausdehnungsrichtung 6 aufrechterhält. Als Federelemente 24 sind Zugfedern vorgesehen, die innerhalb des Gehäuses 3 gegenüberliegende erste Seitenflächen 10 miteinander verbinden. Die ersten Gehäuseteile 7 sind über die in den Fig. 1 bis 6 dargestellten Ausgestaltungen der ersten Gehäuseteile 7 und zweiten Gehäuseteile 8 miteinander verbunden.

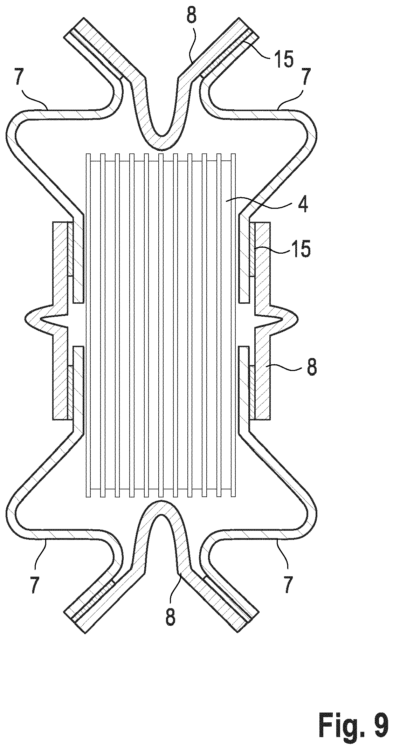

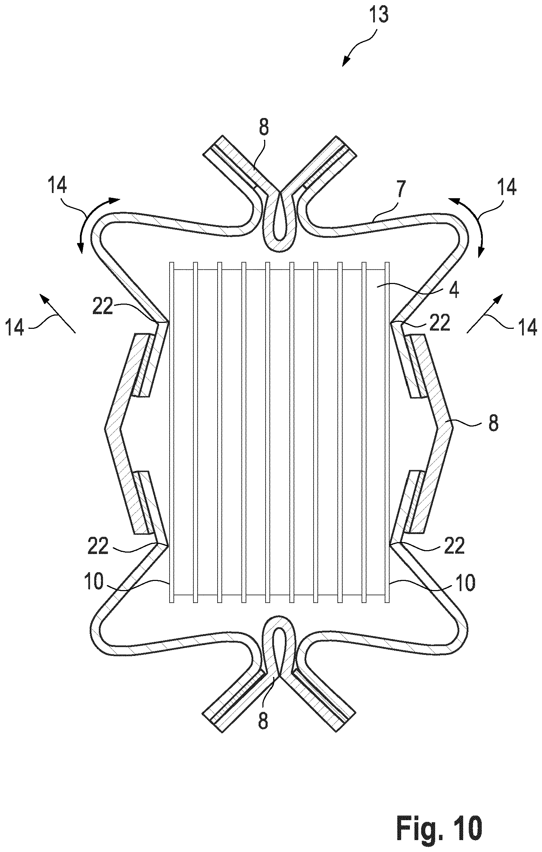

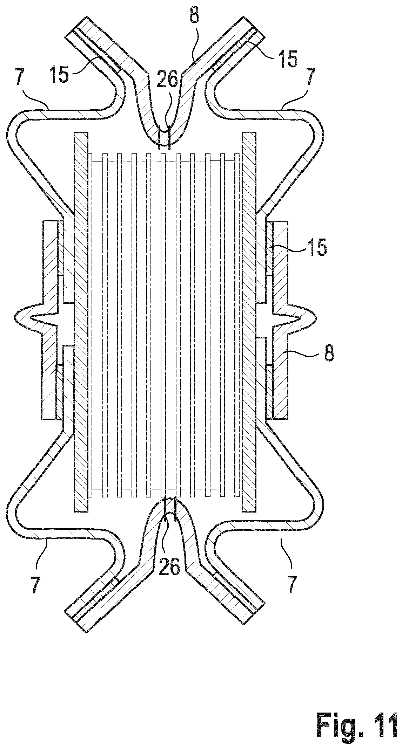

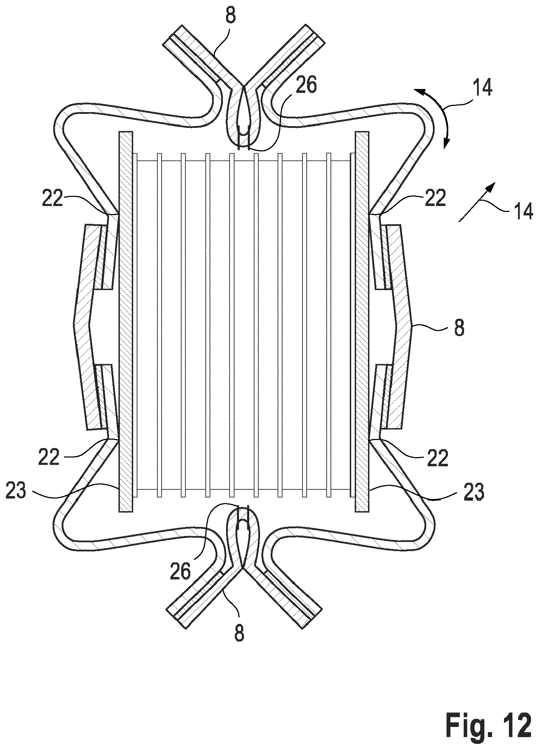

Die Fig. 9 zeigt eine Batterieanordnung 1 gemäß einer fünften Ausführungsvariante in einer Seitenansicht im Schnitt. Fig. 10 zeigt die Batterieanordnung 1 nach Fig. 9 in einer Seitenansicht im Schnitt, im ausgedehnten Zustand. Die Fig. 11 zeigt eine Batterieanordnung 1 gemäß einer sechsten Ausführungsvariante in einer Seitenansicht im Schnitt. Fig. 12 zeigt die Batterieanordnung 1 nach Fig. 11 in einer Seitenansicht im Schnitt, im ausgedehnten Zustand.

Die Fig. 9 bis 12 werden im Folgenden gemeinsam beschrieben. Auf die Ausführungen zu den Fig. 1 bis 8 wird verwiesen.

Bei der fünften Ausführungsvariante (vierte Ausgestaltung) führen die ersten Gehäuseteile 7 bei der Ausdehnung 13 der Zelle 4 gegenüber der Zelle 4 jeweils eine rotatorische Bewegung 14 aus. Die rotatorische Bewegung 14 wird durch an das erste Gehäuseteil 7 angebundene zweite Gehäuseteile 8 ermöglicht, die die Lageveränderung der ersten Gehäuseteile 7 durch Verformung kompensieren.

Das die rotatorische Bewegung 14 ausführende erste Gehäuseteil 7 rotiert um eine, an einer ersten Seitenfläche 10 des Volumens 2 angeordnete und gegenüber der ersten Seitenfläche 10 ortsfeste Kipppachse 22.

Die Kippachse 22 ist an der ersten Seitenfläche 10 angeordnet. Die Kippachse 22 verläuft parallel zur ersten Seitenfläche 10.

Gemäß der sechsten Ausführungsvariante stützt sich das erste Gehäuseteil 7 mit der Kippachse 22 an einer formfesten Stützplatte 23 gegenüber der Zelle 4 ab. Mit der Stützplatte 23 kann eine lokale Flächenpressung als Folge der Abrollbewegung des rotierenden ersten Gehäuseteils 7 gering gehalten werden, so dass Bestandteile der Zelle 4 nicht beschädigt werden.

Nur in den ersten Gehäuseteilen 8 sind Versagensstellen 26 mit verminderter Festigkeit angeordnet bzw. vorgesehen, so dass einem "thermal runaway", also einer unkontrollierten Erwärmung der Zelle 4 eine Notentlüftung der Zelle 4 über das Gehäuse 3 bzw. die Versagensstelle 26 an die Umgebung erfolgen kann.

### Bezugszeichenliste

- 1: Batterieanordnung
- 2: Volumen
- 3: Gehäuse
- 4: Zelle
- 5: Elektrodenfolie
- 6: Hauptausdehnungsrichtung
- 7: erstes Gehäuseteil
- 8: zweites Gehäuseteil
- 9: Kante
- 10: erste Seitenfläche
- 11: zweite Seitenfläche
- 12: erste Verbindung
- 13: Ausdehnung
- 14: Bewegung
- 15: Siegelnaht
- 16: Überlappung
- 17: Abschnitt
- 18: erste Seite
- 19: Endbereich
- 20: zweite Seite
- 21: zweite Verbindung
- 22: Kippachse
- 23: Stützplatte
- 24: Federelement
- 25: Sollbruchstelle
- 26: Versagensstelle
- 27: Siegelelement

## Patentansprüche

1. Batterieanordnung (1), zumindest umfassend ein, ein quaderförmiges Volumen (2) umschließendes, gasdicht ausgeführtes Gehäuse (3) und darin angeordnet zumindest eine Zelle (4) mit aufeinander gestapelten oder gewickelten Elektrodenfolien (5); wobei die Zelle (4) in Abhängigkeit von einem Betrieb oder einer Alterung eine Hauptausdehnungsrichtung (6) aufweist; wobei das Gehäuse (3) miteinander verbundene formfeste erste Gehäuseteile (7) und verformbare zweite Gehäuseteile (8) aufweist; wobei zumindest
• die zweiten Gehäuseteile (8) eine Pouchfolie umfassen; oder
• mindestens ein zweites Gehäuseteil (8) mindestens zwei, an zueinander über eine Kante (9) des Volumens (2) benachbart zueinander angeordneten Seitenflächen (10, 11) des quaderförmigen Volumens (2) angeordnete, erste Gehäuseteile (7) über die Kante (9) hinweg verbindet; oder
• eine erste Verbindung (12) zwischen einem zweiten Gehäuseteil (8) und einem ersten Gehäuseteil (7) mit einer zunehmenden Ausdehnung (13) der Zelle (4) sukzessive versagt; oder
• zumindest ein erstes Gehäuseteil (7) bei der Ausdehnung (13) der Zelle (4) gegenüber der Zelle (4) eine rotatorische Bewegung (14) ausführt;
so dass die Ausdehnung (13) der Zelle (4) in der Hauptausdehnungsrichtung (6) kompensierbar ist und die Gasdichtigkeit gewährleistet ist.

2. Batterieanordnung (1) nach Patentanspruch 1, wobei zumindest ein zweites Gehäuseteil (8) über mindestens eine Siegelnaht (15) gasdicht mit mindestens einem ersten Gehäuseteil (7) verbunden ist.

3. Batterieanordnung (1) nach einem der vorhergehenden Patentansprüche, wobei zumindest ein zweites Gehäuseteil (8) und ein erstes Gehäuseteil (7) zumindest teilweise einander überlappend angeordnet sind, wobei die Gehäuseteile (7, 8) im Bereich der Überlappung (16) miteinander verbunden sind.

4. Batterieanordnung (1) nach einem der vorhergehenden Patentansprüche, wobei das die ersten Gehäuseteile (7) über die Kante (9) hinweg verbindende zweite Gehäuseteil (8) zwischen den Verbindungen mit den ersten Gehäuseteilen (7) einen sich über die Kante (9) hinweg erstreckenden unverbundenen Abschnitt (17) aufweist.

5. Batterieanordnung (1) nach einem der vorhergehenden Patentansprüche, wobei die erste Verbindung (12) auf einer ersten Seite (18) des ersten Gehäuseteils (7) angeordnet ist und sich das zweite Gehäuseteil (8) ausgehend von der ersten Verbindung (12) um einen Endbereich (19) des ersten Gehäuseteils (7) hin zu einer gegenüberliegenden zweiten Seite (20) erstreckt und dort über eine zweite Verbindung (21) mit dem ersten Gehäuseteil (7) gasdicht verbunden ist.

6. Batterieanordnung (1) nach einem der vorhergehenden Patentansprüche, wobei sich das zweite Gehäuseteil (8), während der Ausdehnung (13) der Zelle (4) und während die erste Verbindung (12) infolge der Ausdehnung (13) der Zelle (4) sukzessive versagt, sukzessive weiter verformt.

7. Batterieanordnung (1) nach einem der vorhergehenden Patentansprüche, wobei das die rotatorische Bewegung (14) ausführende erste Gehäuseteil (7) um eine, an einer Seitenfläche (10, 11) des Volumens (2) angeordnete und gegenüber der Seitenfläche (10, 11) ortsfeste Kipppachse (22) rotiert.

8. Batterieanordnung (1) nach Patentanspruch 7, wobei sich das erste Gehäuseteil (7) mit der Kippachse (22) an einer formfesten Stützplatte (23) gegenüber der Zelle (4) abstützt.

9. Batterieanordnung (1) nach einem der vorhergehenden Patentansprüche, wobei das Gehäuse (3) während der Ausdehnung (13) der Zelle (4) eine konstante Verspannung der Zelle (4) zumindest gegenüber der Hauptausdehnungsrichtung (6) aufrechterhält.

10. Batterieanordnung (1) nach einem der vorhergehenden Patentansprüche, wobei zumindest zwischen zwei ersten Gehäuseteilen (7) mindestens ein elastisch verformbares Federelement (24) angeordnet ist, so dass das Gehäuse (2) während der Ausdehnung (13) der Zelle (4) eine konstante Verspannung der Zelle (4) zumindest gegenüber der Hauptausdehnungsrichtung (6) aufrechterhält.
